# EUROPEAN PATENT APPLICATION

(11) **EP 0 920 237 A2**
(43) Date of publication of application: **02.06.1999**
(21) Application number: 98309780.9
(22) Date of filing: 30.11.1998
(51) Int. Cl.: H04Q 11/04, H04M 11/00

(54) **Multifunctional apparatus and communication method**

(30) Priority: 28.11.1997 KR 9763643
(71) Applicant: SAMSUNG ELECTRONICS CO., LTD., Suwon-City, Kyungki-do (KR)
(72) Inventor: Oak, Seung-soo, Sungnam, Kyonggi-do (KR)
(74) Representative: Hutchinson, Glenn Stanley (GB)

(57) **Abstract**

This present invention relates to a multifunctional apparatus and communication method for transferring and receiving facsimile data and communication data by using an integrated service digital network. According to the present invention, the apparatus comprises a computer interfacing means for transferring and receiving the facsimile data and the communication data to/from a computer; a line interfacing means for transferring the data to the integrated service digital network and for receiving the facsimile data and the communication data from the integrated service digital network; an ISAC for performing protocols to control a connection with the integrated service digital network and for transferring and receiving the facsimile data and the communication data to/from the integrated service digital network at a first transferring rate; and a serial input and output means for converting the communication data transmitted from the computer through the computer interfacing means and facsimile data scanned by a scanning means into serial data and transferring the serial data to the ISAC at a second transferring rate, and for receiving and converting the communication data and facsimile data transmitted from the integrated service digital network through the ISAC into the serial data at the second transferring rate.

## Description

The present invention relates to a multifunctional apparatus, and more particularly to a multifunctional apparatus for transferring and receiving facsimile data and communication data by using an integrated service digital network, which transfers and receives the facsimile data using G3 and G3C protocols and which is connected to a computer so as to print and scan data provided from the computer.

Generally, a multifunctional apparatus as is well known is an assembly of a printer, a scanner, a facsimile device, and a copier and referred to as a peripheral which is combined with a computer. The multifunctional apparatus comprises multiple functions such as printing, scanning, facsimile data transferring and copying.

The multifunctional apparatus according to the conventional art is connected to a computer by means of a serial port or a parallel port of the computer. The multifunctional apparatus has functions for printing data, scanning a document and storing document data in a memory of the computer, and transferring facsimile data.

To transfer the document data, the multifunctional apparatus scans the document to be transferred and transfers the document data, or after a document has been written using a word processor, document data can be transferred by means of an application program supporting a facsimile transmission. A user must use an internal or external modem to communicate with another use by means of a computer, that is, when the multifunctional apparatus is connected to the computer to transfer and receive data to/from a communication network, there is a disadvantage in that the computer is provided with a modem.

It is an object of the present invention to at least mitigate the problems of the prior art.

Accordingly, a first aspect of the present invention provides a multifunctional apparatus for transferring and receiving facsimile data and communication data by using an integrated service digital network, the apparatus comprising:
a computer interfacing means for receiving dialling information and for transferring and receiving the facsimile data and the communication data to/from a computer;
a line interfacing means for transferring the data to the integrated service digital network and for receiving the facsimile data and the communication data from the integrated service digital network;
an ISAC for performing protocols, preferably class 1, class 2, and class 3 protocols, to control a connection with the integrated service digital network established using the dialling information and for transferring and receiving the facsimile data and the communication data to the integrated service digital network at a first transferring rate; and
a serial input and output means for converting the communication data transmitted from the computer through the computer interfacing means and facsimile data produced by a scanning means into serial data and transferring the serial data to the ISAC at a second transferring rate, and for receiving and converting the communication data and facsimile data transmitted from the integrated service digital network through the ISAC into the serial data at the second transferring rate.

The first transferring rate is about 64 kbps at which the data are transferred and received through the integrated service digital network.

The second transferring rate is about 768 kbps at which the serial data are transferred in the ISAC.

Advantageously, the present invention provides a multifunctional apparatus for transferring and receiving not only facsimile data but which also provides for data exchange with an internet service provider.

A second aspect of the present invention provides A communication method for a multifunctional apparatus that transfers and receives facsimile data and communication data via an integrated service digital network, the method comprising the steps of:
receiving, via a computer interfacing means (50), dialling information from a computer and transferring and receiving the facsimile data and the communication data to/from the computer;
transferring, via a line interfacing means (110), data to the integrated service digital network and receiving the facsimile data and the communication data from the integrated service digital network at a first transferring rate;
performing, via a ISAC (100), class 1, class 2 and class 3 protocols to control a connection with the integrated service digital network established using the dialling information and transferring and receiving the facsimile data and the communication data to/from the integrated service digital network; and
converting, via a serial input and output means (90), the communication data transmitted from the computer through the computer interfacing means (50) and facsimile data produced by a scanning means (30) into serial data and transferring the serial data to the ISAC at a second transferring rate, and receiving and converting the communication data and facsimile data transmitted from the integrated service digital network through the ISAC into the serial data at the second transferring rate.

An embodiment of the present invention will now be described, by way of example only, with reference to the accompanying drawings in which:
figure 1 is a schematic block diagram showing a multifunctional apparatus having a facsimile function which can be connected to an integrated service digital network; and
figure 2 shows a transmission of data between a serial input and output means, an ISAC, and a line interfacing section of a multifunctional apparatus according to an embodiment of the present invention.

An integrated service digital network (hereinafter, referred to as ISDN) will be described briefly. The ISDN is a digital network supporting voice and non-voice services.

In the ISDN, different data such as voice, characters, and image data, which are transferred and received through a public switched telephone network, a public switched data network, a telex network, and a private facsimile line, are converted into digital data and transferred and received in that form.

The public service telephone network conventionally provides one analog channel for a user while the ISDN provides two digital channels for the user. The two channels can be used to support a telephone call and to transfer and receive communication data by using a personal computer and a facsimile device, simultaneously, that is, transmission and reception of data and a telephone call can be performed through the ISDN without using various types of communication lines.

Furthermore, since the ISDN uses digital signals, there is an advantage in that transmission and reception of the data can be performed at high data rates with greater noise immunity and a reduced loss of the data.

An ISDN generally has two or three channels, that is, the ISDN has a D-channel for transferring and receiving control signals, a B-channel for transferring and receiving substantial data, and a H channel having six B-channels.

Services for connecting with the ISDN can be generally divided into two types, for example, a primary rate interface (hereinafter, referred to as PRI) and a basic rate interface (hereinafter, referred to as BRI).

The PRI is a first group connecting service and mainly available to an internet service provider and companies for reselling a line. The European PRI is generally divided into thirty B-channels and one D-channel and a North American PRI is divided into twenty three B-channels and one D-channel.

On the other hand, the BRI is a basic connecting service and mainly available to personal subscribers. The BRI includes two B-channel and one D-channel. The B-channels respectively have a transmission rate of 64 kbps. The transmission and reception of data and voice communication can be performed simultaneously by utilising the two B-channel and the one D-channel. In the case of using the two B-channels for voice communication, two telephones can be connected to the BRI.

Another service such as a facsimile service can be applied to the ISDN.

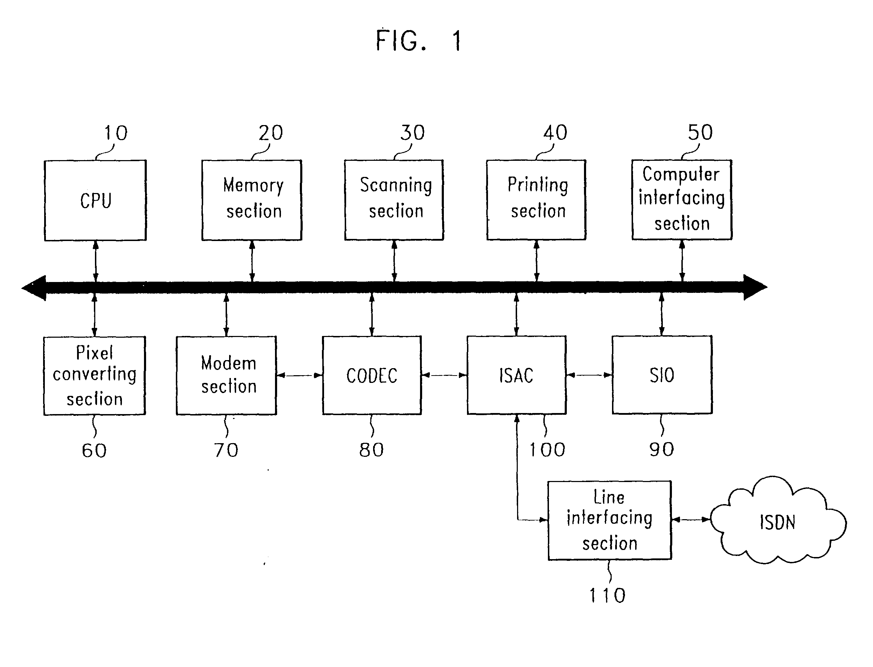

Figure 1 is a block diagram showing a multifunctional apparatus having a facsimile transferring function according to an embodiment of the present invention, which is connected to the ISDN.

As shown in figure 1, a CPU 10 substantially controls the multifunctional apparatus by executing appropriate software.

A memory 20 stores program data, protocol data, data relating a transmission and reception of character data. The CPU 10 can access and store the above data in the memory 20.

A scanning means 30 scans a document and converts the document into corresponding image data in digital form. The scanning means 30 provides the image data to the CPU 10.

A modem 70 is controlled by the CPU 10 to modulate data output -from the CPU 10 into analog data or to demodulate analog data into digital data.

A printing means 40 prints facsimile data received through the ISDN under the control of the CPU 10.

A computer interfacing means 50 connects the multifunctional apparatus with a computer using serial or parallel connections. The serial connection is an asynchronous communication using an RS-232C COM port as a serial port. The parallel connection is utilised for transferring data to a printer or plotter.

A pixel converting means 60 converts the image data received from the scanning means 30 into data adapted for transmission.

A CODEC 80 converts the analog signals modulated by the modem 70 into digital signals capable of being transferred through the ISDN or converts digital signals received through the ISDN into analog signals capable of being analysed by the modem 70.

A serial input/output device 90 converts the data received from the computer or the scanning means into a form suitable for the B-channel of the ISDN, that is, the serial input/output device 90 converts the data received via an internal bus into serial data and transfers the serial data to an ISDN subscriber access controller 100 (hereinafter, referred to as ISAC). Moreover, the serial input/output device 90 converts serial data received from the ISAC 100 into a parallel data and transfers the parallel data via the internal bus to the CPU 10.

The ISAC 100 performs line coding and line activating/inactivating class 1 ISDN D-channel functions and a line access procedure on the D-channel. Furthermore, the ISAC 100 selects and sets a channel and detects a pathway corresponding to a dialling and the nature of a reception side or receiving device, for example, a facsimile device or a multifunctional apparatus. The ISAC 100 continually monitors communications with the receiving device and transfers and receives the data through the line interfacing section 110 for the ISDN.

Hereinafter, the classes for the protocols will be described in detail.

A class one protocol requires an eight pin type of modular connector which is a physical layer and used as a socket, a wave shaping of transferred signal on a subscribers line, time division multiplexing access to the B and D-channels relating the subscribers line, and an adaptive control of the D-channel in a connection of bus.

Class two provides a multiple link access to support a data link layer via the bus and to establish a plurality of data link connections on a physical layer. It is referred to as the link access protocol on the D-channel. Since the link access protocol on the D-channel is based on a high level data link control, a signal can be reliably transferred through the D-channel.

Class three provides a series of call signals on the D-channel so that the communication is performed over a network through the B or D-channel. In an exchange, a channel is selected and set during the setting of call signal and a pathway relating a response for a dialling is set. Then, the nature of the reception side device is detected and the possibility of establishing communication is identified.

In a case of a B-channel, selecting and setting of a communication channel and identification of a reception side terminal is performed through the D-channel and the establishment of call using an X.25 is performed through the selected channel.

The ISDN line interfacing section 110 interfaces signals of the ISDN so that digital data are transferred and received within specified physical and electrical regulations.

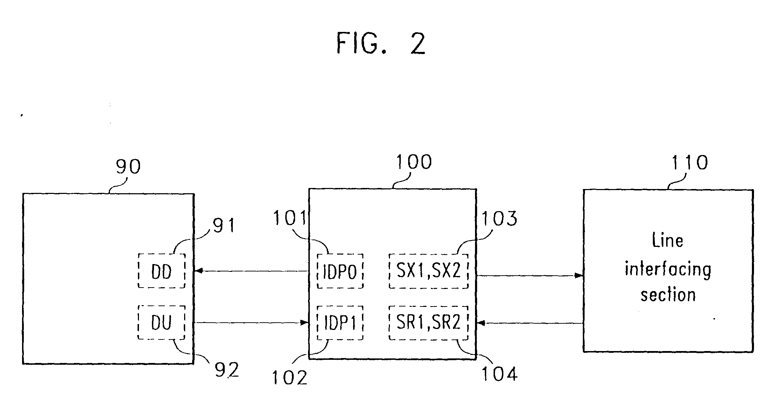

Hereinafter, the operation of the multifunctional apparatus according to an embodiment of the present invention will be described in detail with reference to figures 1 and 2.

A connection to the internet can be established and supported through a local area network and/or a public line network. The connection to the internet through the public line network can be established through the public switched telephone network and/or through the integrated service digital network.

Hereinafter, a way of connecting to a remote device through the ISDN according to an embodiment the present invention will be described.

Conventionally, a computer is connected to an internet service provider by dialling a telephone number of the internet service provider through a program for dialling. At that time, the computer performs the dialling by using a modem. The computer transfers dialling information to a computer interfacing means 50 through a parallel port.

The CPU 10 controls an ISAC 100 to perform classes one, two, and three protocols of the D-channel according to the dialling information. The CPU 10 also controls the ISDN line interfacing section 110 so that the multifunctional apparatus is connected to the internet service provider through the ISDN.

When the computer is connected to the internet service provider, a user drives an application program to transfer and receive the data to/from the internet service provider. At this time, the data is transferred to and received from the internet service provider through a different pathway to the dialling information, that is, when the multifunctional apparatus is connected to the internet service provider through the B-channel by the protocol of the D-channel, the data are transferred and received through the B-channel between the multifunctional apparatus and the internet service provider.

The flow of information is as follows.

Commands for searching information on the internet are transferred from the computer to the multifunctional apparatus through the computer interfacing means 50. Then, the commands are controlled by the CPU 10 to be transferred to the serial input/output device 90 through the internal bus.

The serial input/output device 90 converts the commands into serial data. Then, the serial input/output device 90 transfers the serial data through a data upstream terminal 92 thereof to an input/output module data port one 102.

The transmission rate is about 768 kbps which is the same as the transmission rate of internal serial data in the ISAC 100.

The ISAC 100 changes the transmission rate of 768 kbps of the serial data to a transmission rate of 64 kbps. Then, the ISAC 100 outputs the data through transmission connectors SX1 and SX2 103 and transfers the data to the internet service provider through the ISDN line interfacing means 110.

On the other hand, the data from the internet service provider is received by the ISAC 100 through reception connectors SR1 and SR2 104 at the transmission rate of 64 kbps and converted by the ISAC 100 into serial data having a transmission rate of 768 kbps. The serial data are transferred to a data downstream 91 of the serial input/output device 90 through an input/output module data port 0 of the ISAC 100.

When receiving the serial data, the serial input/output device 90 informs the CPU 10 through an interrupt connector of the reception of the serial data. The CPU 10 receiving an interrupt request transfers the data to the computer interfacing means 50 through the data bus. Finally, the computer interfacing means 50 transfers the data to the computer.

As described above, the calling information such as the dialling information and the internet service information are transferred and received in parallel. The calling information is data on the D-channel and the internet service information is data on the B-channel. Accordingly, the calling information and the internet service information respectively have different pathways from each other.

On the other hand, transmission and reception of facsimile data are as follows.

The facsimile data input through the scanning means 30 are input to the serial input/output device 90 under the control of the CPU 10 and transferred to a reception side facsimile device through the B-channel of the ISDN in the same manner as that of transferring data to the internet service provider, that is, the facsimile data are transferred and received through the B-channel at a transmission rate of 64 kbps.

The reception side facsimile device must be a facsimile device supporting G3C, G3F, and G4 type protocols which are used for connecting with the ISDN.

The calling information such as the dialling information is directly transferred to the ISAC 100 because of information on the D-channel. The CPU 10 controls the ISAC 100 to identify the protocols such as classes one, two and three on the D-channel. Furthermore, the CPU 10 controls the multifunctional apparatus to be connected with the reception side facsimile device through the ISDN. The facsimile data are transferred and received the serial input/output device 90 and the ISDN line interfacing means 110.

Furthermore, the received facsimile data are transferred to the printing means 40 through the pixel converting means 60 according to the CPU 10. The printing means 40 prints the facsimile data.

As described above, since the multifunctional apparatus according to an embodiment of the present invention has a printing function, scanning function, facsimile data transferring function, and a communicating function, there is an advantage in that a separate communication device is not required to support a communication with another communication apparatus by using a computer.

Furthermore, the multifunctional apparatus supports not only the present protocol such as G3 but also protocols such as G3C and G3F so as to transfer and receive the facsimile data thorough the ISDN.

As described above, since the communication by using a computer and the transmission and reception of the facsimile data are performed through the ISDN there is less noise and there is the advantage that the facsimile data are prevented from being distorted.

Since the multifunctional apparatus according to the embodiment of the present invention supports a higher transmission rates than an analog type of a modem, the communicating cost can be reduced.

While the present invention has been particularly shown and described with reference to a particular embodiment thereof, it will be understood by those skilled in the art that various changes in form and detail may be effected therein without departing from the scope of the invention as defined by the appended claims.

## Claims

1. A multifunctional apparatus for transferring and receiving facsimile data and communication data via an integrated service digital network, the apparatus comprising:
a computer interfacing means 50 for receiving dialling information from a computer and for transferring and receiving the facsimile data and the communication data to/from the computer;
a line interfacing means 110 for transferring the data to the integrated service digital network and for receiving the facsimile data and the communication data from the integrated service digital network;
an ISAC (100) for performing, preferably a class 1, a class 2, and a class 3 protocols to control a connection with the integrated service digital network established using the dialling information and for transferring and receiving the facsimile data and the communication data to/from the integrated service digital network at a first transferring rate; and
a serial input and output means (90) section for converting the communication data transmitted from the computer through the computer interfacing means (50) and facsimile data produced by a scanning means (30) into serial data and transferring the serial data to the ISAC at a second transferring rate, and for receiving and converting the communication data and facsimile data transmitted from the integrated service digital network through the ISAC into the serial data at the second transferring rate.

2. A multifunctional apparatus as claimed in claim 1, where the first transferring rate is about 64 kbps at which the data are transferred and received through the integrated service digital network.

3. A multifunctional apparatus as claimed in either of claims 1 or 2, wherein the second transferring rate is about 768 kbps at which the serial data are transferred in the ISAC.

4. A communication method for a multifunctional apparatus that transfers and receives facsimile data and communication data via an integrated service digital network, the method comprising the steps of:
receiving, via a computer interfacing means (50), dialling information from a computer and transferring and receiving the facsimile data and the communication data to/from the computer;
transferring, via a line interfacing means (110), data to the integrated service digital network and receiving the facsimile data and the communication data from the integrated service digital network at a first transferring rate;
performing, via a ISAC (100), class 1, class 2 and class 3 protocols to control a connection with the integrated service digital network established using the dialling information and transferring and receiving the facsimile data and the communication data to/from the integrated service digital network; and
converting, via a serial input and output means (90), the communication data transmitted from the computer through the computer interfacing means (50) and facsimile data produced by a scanning means (30) into serial data and transferring the serial data to the ISAC at a second transferring rate, and receiving and converting the communication data and facsimile data transmitted from the integrated service digital network through the ISAC into the serial data at the second transferring rate.

5. A method as claimed in claim 4, wherein the first transferring rate is about 64 kbps at which the data are transferred and received through the integrated service digital network.

6. A method as claimed in either of claims 4 or 5, wherein the second transferring rate is about 768 kbps at which the serial data are transferred in the ISAC.
